# EUROPEAN PATENT APPLICATION

(11) **EP 4 496 265 A1**
(43) Date of publication of application: **22.01.2025**
(21) Application number: 23186589.0
(22) Date of filing: 20.07.2023
(51) Int. Cl.: H04L 9/40, H04L 9/32

(54) **SECURING COMMUNICATION REQUESTS FROM A VEHICLE COMMUNICATION INTERFACE TO A VEHICLE**

(71) Applicant: VOLVO TRUCK CORPORATION, 405 08 Göteborg (SE)
(72) Inventor: PASTORELLO, Darus, 421 51 VÄSTRA FRÖLUNDA (SE); MAITRE, Julien, 38200 CHUZELLES (FR)
(74) Representative: Kransell & Wennborg KB

(57) **Abstract**

Securing communication requests from a vehicle communication interface to a vehicle. In an exemplary aspect, a vehicle communication interface (VCI) device that is configured to be connected to a vehicle communication port is configured to support secure communications with a vehicle electronic control unit (ECU), such as in a standalone mode. The VCI device is configured to receive a security feature(s) from a connected diagnostic tool to then have secure access to the vehicle ECU when the diagnostic tool is disconnected from the VCI device. In this manner, the VCI device is configured to mimic secure diagnostic behavior of the diagnostic tool and leverage the pre-existing diagnostic infrastructure to securely communicate with the vehicle ECU. This prevents or mitigates unauthorized VCI-like devices from being able to be connected to a vehicle's communication port and obtain vehicle data or provide vehicle programming in an unauthorized manner.

## Description

### TECHNICAL FIELD

The disclosure relates generally to vehicle communication interface equipment that enables communication between a vehicle and external equipment to retrieve vehicle data, including diagnostic data. In particular aspects, the disclosure relates to securing communication request from a vehicle communication interface (VCI) device to a vehicle.

The disclosure can be applied in heavy-duty vehicles, such as trucks, buses, and construction equipment. Although the aspects will be described with respect to a particular vehicle, the disclosure is not restricted to any particular vehicle or type of vehicle.

### BACKGROUND

With the increasing complexity of modem vehicles, the ability to communicate with a vehicle's onboard computer system has become vital for diagnosing and repairing issues efficiently. In this regard, a vehicle communication interface (VCI) electronic device ("VCI device") can be provided to communicate with a vehicle's onboard computer system. For example, a VCI device can be configured to communicate with the vehicle's onboard computer system to retrieve vehicle data such as diagnostic trouble codes (DTCs), which can indicate a problem with a vehicle's electronic control modules (ECMs), sensors, or other components. A VCI can also be used to retrieve real-time vehicle data, such as engine speed, temperature, and fuel consumption. One example of a VCI device is an onboard diagnostic (OBD) reader device that can be connected to an onboard diagnostic (OBD) connector (i.e., port) present in all vehicles to be able to request vehicle data from a vehicle's onboard computer. An OBD reader device is configured to communicate information to the vehicle's onboard computer through its connection to the OBD connector according to a communication protocol (e.g., ISO 9141, controller area network (CAN) bus, etc.).

While some VCI devices may be configured as a standalone device with a user interface that can display vehicle codes from the vehicle's onboard computer to a user, many VCI devices are configured to provide a communication interface between the vehicle's onboard computer system and a connected external diagnostic tool. In this instance, the diagnostic tool is a computing device that is either connected wired or wirelessly to the VCI device to be able to communicate with the vehicle's onboard computer through the VCI device. In this regard, the VCI device provides a gateway communication device between the vehicle's onboard computer and the diagnostic tool.

### SUMMARY

Exemplary aspects disclosed herein include securing communication requests from a vehicle communication interface to a vehicle. In an exemplary aspect, a vehicle communication interface (VCI) electronic device ("VCI device") is provided that is an electronic device configured to be connected (e.g., wired or wirelessly) to a vehicle communication port (e.g., an onboard diagnostic (OBD) port). The VCI device is configured to receive vehicle data (e.g., diagnostic trouble codes (DTCs) and real-time vehicle data, such as engine speed, temperature, and fuel consumption) through the vehicle communication port. The VCI device is a communication gateway that when connected to a vehicle communication port, is configured to propagate communications between an onboard vehicle computer (also referred to as an "electronic control unit" (ECU)) in the vehicle and a diagnostic tool communicatively coupled (wired or wirelessly) to the VCI device. In this manner, the diagnostic tool can request vehicle data through the VCI device from the vehicle's ECU. To prevent unauthorized communications between an unauthorized diagnostic tool and the vehicle, the diagnostic tool includes a diagnostic security feature(s) (e.g., a secure access protocol) to provide secure access to the vehicle ECU. In exemplary aspects, to also provide for the VCI device to support secure communication requests with the vehicle ECU (e.g., in a standalone communication mode), the VCI device is also configured to receive the security feature(s) from the diagnostic tool to then have secure access to the vehicle ECU, such as when the diagnostic tool is disconnected from the VCI device, for example. The diagnostic tool is configured to facilitate authorizing the VCI device to provide the security feature(s) to the VCI device when the diagnostic tool is coupled to the VCI device.

In this manner, by the VCI device being able to be authenticated through the diagnostic tool to receive the security feature(s) necessary for the VCI device to communicate secure requests to the vehicle ECU, this prevents or mitigates unauthorized VCI-like devices from being able to communicate requests to the vehicle ECU in an unauthorized manner. Also, by the VCI device being able to be authenticated through the diagnostic tool to receive the security feature(s) for secure communications to a connected vehicle ECU, the VCI device can mimic the secure diagnostic behavior of the diagnostic tool by leveraging the pre-existing diagnostic infrastructure to communicate with the vehicle ECU in a secure manner. In this manner, this flexibility in the VCI device being able to receive the security feature(s) through the diagnostic tool allows the VCI device to have secure communications with the vehicle ECU without the VCI device having to be vehicle ECU manufacturer specific, and without the vehicle ECU having to be altered to provide specialized security features specific to the VCI device manufacturer.

As a non-limiting example, it may be desired for the VCI device to have secure communication capability to a vehicle ECU in response to a diagnostic tool being disconnected from the VCI device for a period of time as a loss prevention action. The diagnostic tool being disconnected from the VCI device for a period of time may signify that a technician may have forgotten to retrieve and disconnect a VCI device connected to a vehicle communication port when finished with a diagnostic session for the vehicle. In this manner, by the VCI device being configured to have secure communication capability with the vehicle ECU, the VCI device can request that the vehicle ECU report an unconnected state of the VCI device to another system accessible by the vehicle ECU to be reported to a technician, workshop, and/or other system. In other words, the connection between the VCI device and the vehicle ECU can be used by the VCI device to report its unconnected state to other systems through communication to the vehicle ECU, but in a manner that prevents or mitigates unauthorized VCI-like devices from being able to request unauthorized actions to the vehicle ECU.

In another exemplary aspect, to provide for the VCI device to support secure communications with the vehicle ECU, the VCI device is configured to store a secure access protocol (as a security feature) and an ECU key (e.g., an ECU public key) in a security circuit associated with the VCI device (e.g., a hardware security module (HSM) with tamper-proof measures). For example, the secure access protocol can be a security algorithm that is programmed into the diagnostic tool to provide secure communication to the ECU. In an example, the secure access protocol and ECU key are obtained by the VCI device from an authorized ECU agent (e.g., a vehicle manufacturer for the ECU) through the diagnostic tool as part of an initialization process, when the diagnostic tool was connected to the VCI device and the diagnostic tool had established secure communications to the authorized ECU agent. As a condition to the VCI device receiving the secure access protocol and the ECU key, the diagnostic tool previously received identification information for the VCI device ("VCI device identification") from the VCI device in a secure manner that was communicated by the diagnostic tool to the ECU agent to verify the VCI device as an authorized device. As an example, the VCI device may have been pre-authorized in a registration process with the ECU agent based on a trusted manufacturer of the VCI device providing the VCI device identification to the authorized ECU agent. Thus later, when the VCI device desires to establish a communication session with a connected vehicle ECU, such as in a standalone mode, the VCI device sends a request to the vehicle ECU. The vehicle ECU sends back a security challenge (e.g., a random number seed) to the VCI device. The security circuit in the VCI device generates an encrypted security access key-based security challenge, the ECU key, and the secure access protocol. This encrypted security access key is then communicated by the VCI device to the vehicle ECU. The vehicle ECU can then authenticate the VCI device by decrypting the encrypted security access key using a key paired with its ECU key (i.e., in a public/private key pair). In response to the vehicle ECU authenticating the VCI device based on the decrypted VCI security access key, the vehicle ECU can then authorize further communications in a communication session with the VCI device as an authorized VCI device.

According to a first aspect of the disclosure, a VCI device is provided. The VCI device comprises a security circuit comprising a secure memory. The VCI device also comprises a processing circuit communicatively coupled to the security circuit. The processing circuit is configured to receive a secure access protocol and an encrypted ECU key from a diagnostic tool, send a diagnostic request to a vehicle ECU, receive a security challenge from the vehicle ECU in response to the diagnostic request, and in response to receiving the security challenge, request the security circuit to decrypt the encrypted ECU key into a decrypted ECU key and generate a security challenge response based on the decrypted ECU key and the secure access protocol, and send the security challenge response to the vehicle ECU.

Optionally in some examples, including in at least one preferred example, the security circuit is configured to decrypt the encrypted ECU key based on the encrypted ECU key; and generate the security challenge response based on the decrypted ECU key and the secure access protocol.

Optionally in some examples, including in at least one preferred example, the processing circuitry is further configured to receive a second security challenge response from the vehicle ECU in response to sending the security challenge response to the vehicle ECU; and in response to the second security challenge response indicating authentication of the VCI device, send a second diagnostic request based on the diagnostic request to the vehicle ECU.

Optionally in some examples, including in at least one preferred example, the processing circuitry is further configured to detect if the diagnostic tool is not connected to the VCI device, and in response to detecting the diagnostic tool is not connected to the VCI device, send the diagnostic request to a vehicle ECU.

Optionally in some examples, including in at least one preferred example, the diagnostic command comprises a VCI device loss prevention command.

Optionally in some examples, including in at least one preferred example, the processing circuitry is further configured to receive a VCI device identification signature request from the diagnostic tool, and in response to receiving the VCI device identification signature request, request the security circuit to sign a VCI device identification for the VCI device based on a VCI endorsement key.

Optionally in some examples, including in at least one preferred example, the VCI device identification comprises a unique serial number of the VCI device.

Optionally in some examples, including in at least one preferred example, the processing circuitry is further configured to receive a request from the diagnostic tool to store the encrypted ECU key, and in response to receiving the request to store the encrypted ECU key, store the encrypted ECU key in a memory accessible by the processing circuitry.

Optionally in some examples, including in at least one preferred example, the processing circuitry is further configured to receive a request from the diagnostic tool to store the secure access protocol after receiving the request to store the encrypted ECU key, and in response to receiving the request to store the secure access protocol, store the secure access protocol in the memory.

Optionally in some examples, including in at least one preferred example, the processing circuitry is configured to receive the security challenge comprising a seed from the vehicle ECU in response to sending the diagnostic request to the vehicle ECU, and in response to receiving the security challenge, request the security circuit to generate the security challenge response based on the seed, the decrypted ECU key, and the secure access protocol.

Optionally in some examples, including in at least one preferred example, the processing circuitry is further configured to establish a communication session with the diagnostic tool connected to the VCI device, the processing circuitry configured to receive the secure access protocol and the encrypted ECU key in the communication session.

Optionally in some examples, including in at least one preferred example, the VCI device also includes a vehicle connector configured to be connected to a vehicle communication port communicatively coupled to the vehicle ECU, wherein the processing circuitry is communicatively coupled to the vehicle connector, and the processing circuitry is configured to send the diagnostic request through the vehicle connector to the vehicle ECU, receive the security challenge through the vehicle connector from the vehicle ECU in response to the diagnostic request; and send the security challenge response through the vehicle connector to the vehicle ECU.

According to a second aspect of the disclosure, a computer-implemented method of authorizing a vehicle communication interface (VCI) device with a vehicle electronic control unit (ECU) to allow for the VCI device to provide secure requests to the vehicle ECU is provided. The method comprises the VCI device receiving a secure access protocol and an encrypted ECU key from a diagnostic tool, sending a diagnostic request to the vehicle ECU, receiving a security challenge from the vehicle ECU in response to the diagnostic request, and in response to receiving the security challenge, decrypting the encrypted ECU key into a decrypted ECU key, generating a security challenge response based on the decrypted ECU key and the secure access protocol, and sending the security access response to the vehicle ECU.

Optionally in some examples, including in at least one preferred example, the method further comprises receiving a second security challenge from the vehicle ECU in response to sending the security challenge to the vehicle ECU, and sending a second diagnostic request based on the first diagnostic request to the vehicle ECU in response to the second security challenge response indicating authentication of the VCI device.

Optionally in some examples, including in at least one preferred example, the method further comprises detecting if the diagnostic tool is not connected to the VCI device, and in response to detecting the diagnostic tool not connected to the VCI device, sending the diagnostic request to a vehicle ECU.

Optionally in some examples, including in at least one preferred example, the method further comprises receiving a VCI device identification signature request from the diagnostic tool, and requesting the security circuit to sign a VCI device identification for the VCI device based on a VCI endorsement key, in response to receiving the VCI device identification signature request.

Optionally in some examples, including in at least one preferred example, the method comprises receiving the security challenge comprising receiving a seed from the vehicle ECU, in response to sending the diagnostic request to the vehicle ECU; and requesting the security circuit to generate the security challenge response based on the seed, the decrypted ECU key, and the secure access protocol, in response to receiving the security challenge response.

According to a third aspect of the disclosure, a computer program product comprises program code for performing, when executed by the processing circuitry, any of the aforementioned methods.

According to a fourth aspect of the disclosure, a non-transitory computer-readable storage medium comprises instructions, which, when executed by the processing circuitry, cause the processing circuitry to perform any of the aforementioned methods.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, processing circuitry, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle that has an onboard electronic control unit (ECU) configured to control certain operations of the vehicle and to communicate vehicle data to a vehicle communication port (e.g., an onboard diagnostic (OBD) port) to be received by a connected vehicle communication interface (VCI) device;
**FIG. 2** is a diagram of a VCI device connected to the vehicle communication port in **FIG. 1****,** wherein the VCI device is configured to be wired or wirelessly coupled to a connected external diagnostic tool such that the diagnostic tool can make secure requests to the vehicle ECU through the VCI device connected to the vehicle communication port;
**FIG. 3** is a schematic diagram of an exemplary VCI device that includes communication interfaces configured to be coupled to a vehicle communication port and diagnostic tool, a security circuit configured to securely store a security feature(s) to support secured access to a vehicle ECU, and a processing circuitry configured to execute software to initialize the VCI device as an authenticated secured device to enable secure communications with the vehicle ECU;
**FIG. 4A** is a flowchart illustrating an exemplary process of initializing the VCI device to receive a security feature(s) from a connected diagnostic tool to allow the VCI device to mimic a diagnostic tool to allow secure communications with the vehicle ECU;
**FIG. 4B** is a flowchart illustrating an exemplary communication process of a VCI device communicating with a vehicle ECU in a secure manner such that the vehicle ECU can authenticate the VCI device as an authorized device to provide requests to the vehicle ECU;
**FIG. 5** is an exemplary communication flow / process illustrating an exemplary VCI device registration process with an authorized ECU agent, such as the vehicle manufacturer of the vehicle ECU;
**FIG. 6** is an exemplary communication flow / process illustrating an exemplary configuration process to configure lists of VCI devices belonging to vehicle workshops;
**FIG. 7** is an exemplary communication flow / process illustrating an exemplary VCI device discovery process performed by a diagnostic tool connected to a VCI device;
**FIGS. 8A** and **8B** are an exemplary communication flow / process illustrating another exemplary process of initializing the VCI device to receive a security feature in the form of a secure access protocol and ECU key from a connected diagnostic tool to allow the VCI device to mimic a diagnostic tool to allow secure communications with a vehicle ECU;
**FIG. 9** **is** an exemplary communication flow / process for a normal diagnostic session between the diagnostic tool and the vehicle ECU using the VCI device as an intermediary device;
**FIG. 10** is an exemplary communication flow / process illustrating another exemplary communication process of a VCI device directly communicating requests (e.g., diagnostic requests) with a connected vehicle, such that the vehicle ECU can authenticate the VCI device and then provide responses to the VCI device in response to such requests if authenticated; and
**FIG. 11** is a block diagram of an exemplary computer system that can be included in a VCI device, including but not limited to the VCI device in **FIGS. 2** and **3****,** to securely store a security feature(s) to support secured access to a vehicle ECU, and initialize the VCI device as an authenticated secured device to permit communications with the vehicle ECU.

### DETAILED DESCRIPTION

The detailed description set forth below provides information and examples of the disclosed technology with sufficient detail to enable those skilled in the art to practice the disclosure.

Exemplary aspects disclosed herein include securing communication requests from a vehicle communication interface to a vehicle. In an exemplary aspect, a vehicle communication interface (VCI) electronic device ("VCI device") is provided that is an electronic device configured to be connected (e.g., wired or wirelessly) to a vehicle communication port (e.g., an onboard diagnostic (OBD) port). The VCI device is configured to receive vehicle data (e.g., diagnostic trouble codes (DTCs) and real-time vehicle data, such as engine speed, temperature, and fuel consumption) through the vehicle communication port. The VCI device is a communication gateway that when connected to a vehicle communication port, is configured to propagate communications between an onboard vehicle computer (also referred to as an "electronic control unit" (ECU)) and a diagnostic tool communicatively coupled (wired or wirelessly) to the VCI device. In this manner, the diagnostic tool can request vehicle data through the VCI device from the vehicle's ECU. To prevent unauthorized communications between an unauthorized diagnostic tool and the vehicle, the diagnostic tool includes a diagnostic security feature(s) (e.g., a secure access protocol) to provide secure access to the vehicle ECU. In exemplary aspects, to also provide for the VCI device to support secure communication requests with the vehicle ECU (e.g., in a standalone communication mode), the VCI device is also configured to receive the security feature(s) from the diagnostic tool to then have secure access to the vehicle ECU, such as when the diagnostic tool is disconnected from the VCI device, for example. The diagnostic tool is configured to facilitate authorizing the VCI device to provide the security feature(s) to the VCI device when the diagnostic tool is coupled to the VCI device.

In this manner, by the VCI device being able to be authenticated through the diagnostic tool to receive the security feature(s) necessary for the VCI device to communicate secure requests to the vehicle ECU, this prevents or mitigates unauthorized VCI-like devices from being able to communicate requests to the vehicle ECU in an unauthorized manner. Also, by the VCI device being able to be authenticated through the diagnostic tool to receive the security feature(s) for secure communications to a connected vehicle ECU, the VCI device can mimic the secure diagnostic behavior of the diagnostic tool by leveraging the pre-existing diagnostic infrastructure to communicate with the vehicle ECU in a secure manner. In this manner, this flexibility in the VCI device being able to receive the security feature(s) through the diagnostic tool allows the VCI device to have secure communications with the vehicle ECU without the VCI device having to be vehicle ECU manufacturer specific, and without the vehicle ECU having to be altered to provide specialized security features specific to the VCI device manufacturer.

As a non-limiting example, it may be desired for the VCI device to have secure communication capability to a vehicle ECU in response to a diagnostic tool being disconnected from the VCI device for a period of time as a loss prevention action. The diagnostic tool being disconnected from the VCI device for a period of time may signify that a technician may have forgotten to retrieve and disconnect a VCI device connected to a vehicle communication port when finished with a diagnostic session for the vehicle. In this manner, by the VCI device being configured to have secure communication capability with the vehicle ECU, the VCI device can request that the vehicle ECU report an unconnected state of the VCI device to another system accessible by the vehicle ECU to be reported to a technician, workshop, and/or other system. In other words, the connection between the VCI device and the vehicle ECU can be used by the VCI device to report its unconnected state to other systems through communication to the vehicle ECU, but in a manner that prevents or mitigates unauthorized VCI-like devices from being able to request unauthorized actions to the vehicle ECU.

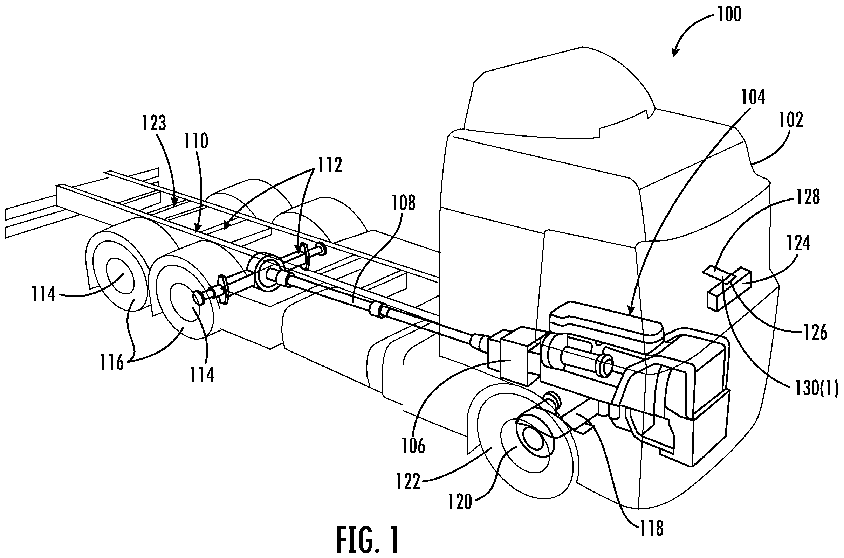

In this regard, **FIG. 1** is an exemplary vehicle **100** that includes a cab **102** that houses an engine **104.** The engine **104** is coupled to a gearbox **106** to couple the engine **104** to a drive shaft **108** to turn the drive shaft **108.** In turn, the drive shaft **108** is coupled to a rear differential **110** that is coupled to a rear axle **112.** The rotation of the drive shaft **108** will cause the power of the engine **104** to be transferred to the rear axle **112** through the rear differential **110** to rotate wheels **114** coupled to the rear axle **112,** and thus rotate the rear tires **116** mounted on the wheels **114.** In this example, the vehicle **100** is a truck that includes two rear axles **112** that are coupled to respective wheels **114.** In this example, the vehicle **100** is also equipped to be operated in four wheel drive (4WD), wherein the drive shaft **108** will be coupled to a front axle **118** that is coupled to front wheels **120,** to drive power to the front wheels **120** causing the front wheels **120** and their mounted tires **122** to rotate. The vehicle **100** may also include rear axles pumps **123** that each include, for example, a hydraulic pump, to control a lifting force applied to the respective rear axles **112** to alter the load distribution on the rear axles **112** of the vehicle **100.**

With continuing reference to **FIG. 1****,** the vehicle **100** also has an onboard computer **124,** also referred to as a vehicle electronic control unit (ECU) **124.** The vehicle ECU **124** is configured to control certain operations of the vehicle **100,** such as the engine **104,** the gearbox **106,** and the rear axles **112** and front axle **118,** among other components. The vehicle ECU **124** is also configured to communicate vehicle data to a vehicle communication port **126** to be received by a connected vehicle communication interface (VCI) device **128.** For example, the vehicle communication port **126** can be an onboard diagnostic (OBD) port that is present in all vehicles to be able to request vehicle data from a vehicle's onboard computer, like the vehicle ECU **124.** The VCI device **128** is an electronic device that has a first external VCI communication port **130(1)** that is configured to be connected to the vehicle communication port **126** to exchange communication requests (e.g., to retrieve vehicle data) from the vehicle ECU **124** through its connection to the vehicle communication port **126** according to a communication protocol (e.g., ISO 9141, controller area network (CAN) bus, etc.). Examples of vehicle data that can be obtained by the VCI device **128** from the vehicle ECU **124** through the connected to the vehicle communication port **126** include, but is not limited to, diagnostic trouble codes (DTCs) and real-time vehicle data, such as engine speed, temperature, and fuel consumption). The VCI device **128** may have a display that is configured to display the vehicle data to a user or technician of the VCI device **128.** Thus, for example, a technician may use the VCI device **128** to perform diagnostics on the vehicle **100** using the vehicle data received by the VCI device **128** from the vehicle ECU **124,** which can then be displayed to the technician on a display on the VCI device **128.**

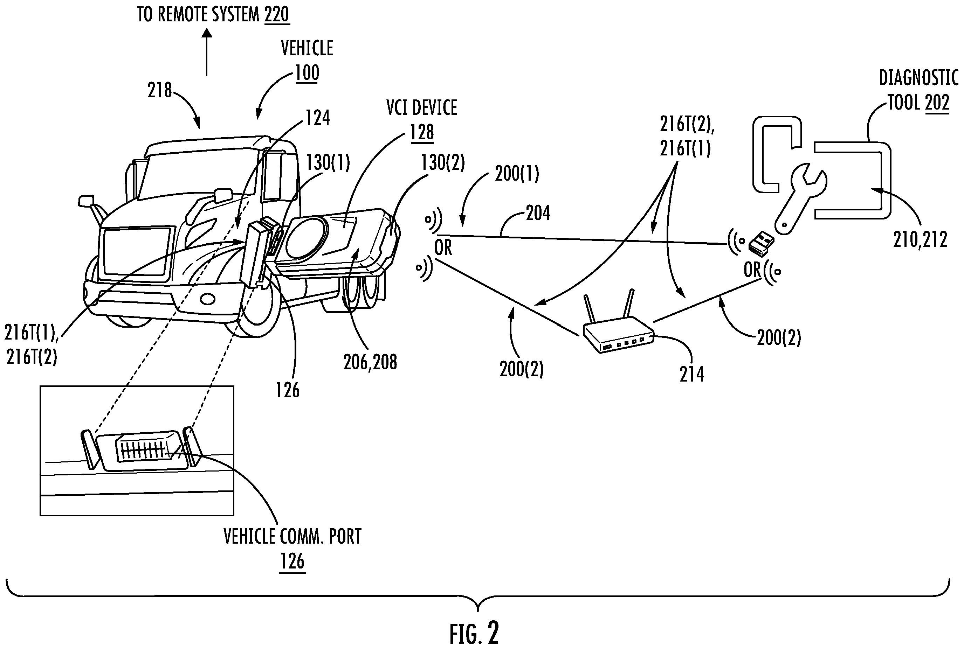

As shown in **FIG. 2****,** the VCI device **128** may also be configured to provide a wired and/or wireless VCI communication interface **200(1), 200(2)** between the vehicle ECU **124** and connected external diagnostic tool **202.** The diagnostic tool **202** is a computing device that may be a personal computer, for example, and is configured to communicate secure requests to the vehicle ECU **124** through the VCI device **128.** The diagnostic tool **202** can be programmed with more sophisticated functions to request vehicle data from the vehicle ECU **124** and otherwise communicate to the vehicle ECU **124** through the connection to the VCI device **128.** The diagnostic tool **202** can also be programmed with security features and functions so that the diagnostic tool **202** can be used to communicate requests to the vehicle ECU **124** that can be authenticated as being from an authorized diagnostic tool for security reasons.

In this regard, the diagnostic tool **202** may be able to be connected wired to the VCI device **128** using the wired VCI communication interface **200(1)** provided by a second external VCI communication port **130(2)** in the VCI device **128.** For example, a communication cable **204** may be provided to physically connect the second external VCI communication port **130(2)** to the diagnostic tool **202.** Alternatively or in addition, the diagnostic tool **202** may be able to be connected wireless to the VCI device **128** using the wireless VCI communication interface **200(2)** provided via a wireless transceiver **206** provided in the VCI device **128.** For example, the wireless transceiver **206** may be a Wi-Fi transceiver **208** that is configured to communicate wirelessly with the diagnostic tool **202** that has a wireless transceiver **210,** such as a Wi-Fi transceiver **212.** For example, a wireless access point **214** may be provided to facilitate communications between the wireless transceiver **206** of the VCI device **128** and the wireless receiver **210** of the diagnostic tool **202.** In this regard, the VCI device **128** provides a gateway communication device between the vehicle ECU **124** and the diagnostic tool **202.** The diagnostic tool **202** can be programmed with more sophisticated functions to transmit secure communication requests **216T(2)** to the vehicle ECU **124,** through the VCI device **128** as an intermediary device. This is to retrieve vehicle data and/or to request other actions or control of components in the vehicle **100** or related to the vehicle **100** through the connectivity of the vehicle ECU **124** and the diagnostic tool 202 to the VCI device **128.** The vehicle ECU **124** can transmit secure communication requests **216T(1)** to the diagnostic tool **202,** through the VCI device **128** as an intermediary device.

As discussed in more detail below, the diagnostic tool **202** can also be programmed with security features and functions so that the diagnostic tool **202** can be used to transmit secure communication requests **216T(2)** through the VCI device **128** to the vehicle ECU **124** that can be authenticated by the vehicle ECU **124** as being from an authorized diagnostic tool for security reasons. For example, as also discussed in more detail below, the vehicle ECU **124** may have the ability to communicate wirelessly through a telematics system **218** (e.g., cellular/radio communication system, satellite communication system) on the vehicle **100** that is configured to wirelessly communicate to a remote system **220** to provide communication capability between the vehicle ECU **124** and the remote system **220.** As an example, the remote system **220** may be a vehicle manufacturer cloud server that is configured to not only be accessed through telematic systems of vehicles, like telematic system **218** of vehicle **100,** but is also configured to be accessed by the vehicle manufacturer to access vehicle data received by vehicles as well as provide data back to the vehicles. For example, the remote system **220** may be able to remotely reconfigure or update software in the vehicle **100** that is configured to be executed by a processing circuitry, including the vehicle ECU **124.**

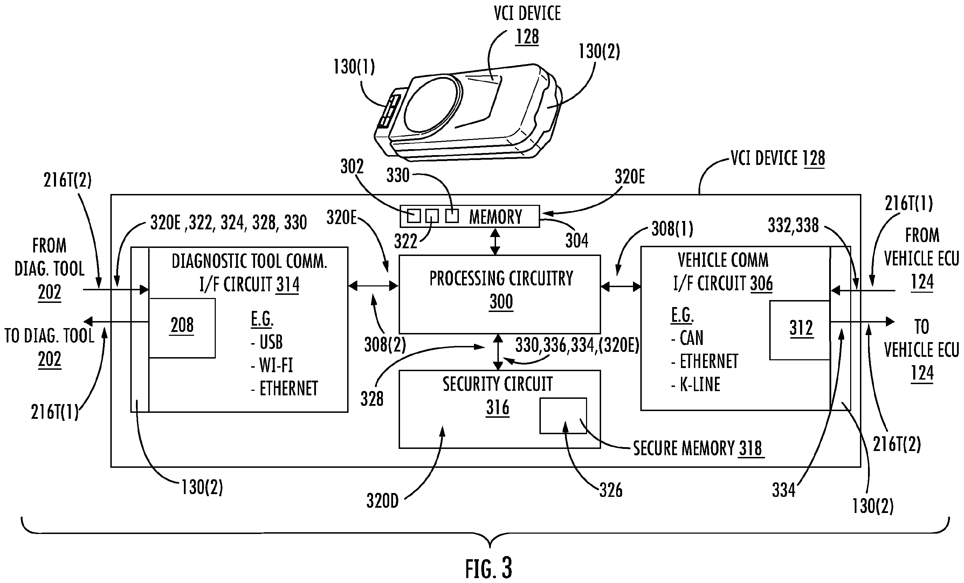

**FIG.** 3 is a schematic diagram of the exemplary VCI device **128** in **FIGS. 1** and **2****.** The exemplary VCI device **128** shown in **FIG. 3** includes additional exemplary detail of circuits to not only facilitate communications (in a communication session) between the diagnostic tool **202** and the vehicle ECU **124** in **FIG. 2****,** but also to provide a mechanism for the VCI device **128** to direct secure communication requests (in a communication session) to the vehicle ECU **124** to be processed in a communication exchange between the VCI device **128** and the vehicle ECU **124.** As illustrated in **FIG. 3****,** the VCI device **128** in this example includes processing circuitry **300** configured to execute program instructions **302** (e.g., software, firmware) stored in a memory **304** to perform programmed tasks. The processing circuitry **300** can be a microprocessor, also referred to as a processor, as an example. The processing circuitry **300** could also be provided as a micro-controller or other hardware processing circuitry, such as a field-programmable gate array (FPGA). The processing circuitry **300** is configured to interface with a vehicle communication interface circuit **306** to exchange communication requests/responses **308(1)** (which may also be referred to herein as "diagnostics requests **308(1)"** or "diagnostic responses **308(1)**") with the processing circuitry **300,** through the first external VCI communication port **130(1)** to the vehicle ECU **124,** to receive/transmit communication requests **216T(1), 216T(2)** from/to the vehicle ECU **124** (see **FIG. 2****).** For example, the vehicle communication interface circuit **306** includes a transceiver **312** in this example configured to receive/transmit communication requests **216T(1), 216T(2)** from/to the vehicle ECU **124.** The vehicle communication interface circuit **306** and its transceiver **312** can be configured to support any desired standard or proprietary communication wired and/or wireless protocol, such as CAN bus, Ethernet, and K-line communication protocols as examples.

With continuing reference to **FIG. 3****,** the processing circuitry **300** in the VCI device **128** is also configured to interface with a diagnostic tool communication interface circuit **314** to exchange communication requests/responses **308(1), 308(2)** with the processing circuitry **300,** through the second external VCI communication port **130(2),** to the diagnostic tool **202** (see also, **FIG. 2****).** Communication requests/responses **308(2)** may also be referred to herein as "diagnostic requests **308(2)"** or "diagnostic responses **308(2)".** The diagnostic tool communication interface circuit **314** includes the wireless transceiver **206** in this example that is configured to transmit communication requests **216T(1)** received from the vehicle ECU **124** to the diagnostic tool **202.** The diagnostic tool communication interface circuit **314** is also configured to receive communication requests **216T(2)** from the diagnostic tool **202** to be provided to the vehicle ECU **124.** The diagnostic tool communication interface circuit **314** can be configured to support any desired standard or proprietary wired or wireless communication protocol, such as universal serial bus (USB), Wi-Fi, and Bluetooth communication protocols as examples. For example, the diagnostic tool communication interface circuit **314** may support a wired and/or wireless communication capability to the diagnostic tool **202.** In this regard, note that the transceiver **206** could be a wireless and/or wired transceiver.

In this manner, as shown in **FIG. 3** by example, the VCI device **128** includes circuitry and operations that allow the VCI device **128,** when its second external VCI communication port **130(2)** is coupled to the vehicle communication port **126,** to interface with the vehicle ECU **124** to obtain vehicle data, such as diagnostic codes. Also, in this example, the VCI device **128** includes circuitry and operations that allow the VCI device **128** to also act as a communication conduit or gateway to forward or otherwise transmit communication requests **216T(2)** received from the diagnostic tool **202** to the vehicle ECU **124.** This is when the first external VCI communication port **130(1)** of the VCI device **128** is connected to the vehicle **100** and thus communicatively coupled to the vehicle ECU **124.** The diagnostic tool **202** can include security features that allow it to format or otherwise create secure communication requests **216T(2)** to be transmitted to the vehicle ECU **124** that can be verified or authenticated by the vehicle ECU **124** as being authorized. For example, the diagnostic tool **202** may have private/public encryption capability that uses a private key assigned to the diagnostic tool **202** to digitally sign (i.e., encrypt) secure communication requests **216(2)** transmitted to the vehicle ECU **124.** As discussed in more detail below, in an example, the vehicle ECU **124** can be equipped with the public key that is paired with the private key for the vehicle ECU **124** to allow the vehicle ECU **124** to authenticate (i.e., decrypt) the secure communication request **216T(2)** from the diagnostic tool **202.** In an example, as discussed in more detail below, the diagnostic tool **202** has the public key of the vehicle ECU **124** to be able to encrypt identification information about the VCI device **128** to send to the vehicle ECU **124** to authorize the VCI device **128.** The vehicle ECU **124** uses its private key to decrypt the identification information about the VCI device **128.** The vehicle ECU **124** can then determine whether the diagnostic tool **202** is authorized to provide secure communication requests **216T(2)** to the vehicle ECU **124,** and if so, the vehicle ECU **124** can respond with secure communication responses **216T(1)** to such requests using the VCI device **128** as an intermediary device.

As discussed above, it is also desired to provide for the VCI device **128** to be able to support secure communication requests **308(1)** to the vehicle ECU **124** that were generated by the VCI device **128** that are not a forwarding of received secure communication requests **216T(2)** from the diagnostic tool **202.** For example, it may be desired for the VCI device **128** to have direct secure communication capability to the vehicle ECU **124** in response to a previously connected diagnostic tool **202** being disconnected from the VCI device **128** for a period of time as a loss prevention action. The diagnostic tool **202** being disconnected from the VCI device **128** for a period of time may signify that a technician may have forgotten to retrieve and disconnect a VCI device **128** connected to the vehicle communication port **126** when finished with a diagnostic session for the vehicle **100.** In this manner, by the VCI device **128** being configured to have secure communication capability with the vehicle ECU **124,** the VCI device **128** can request that the vehicle ECU **124** report an unconnected state of the VCI device **128** to another system accessible by the vehicle ECU **124** to be reported to a technician, workshop, and/or other system. In other words, the connection between the VCI device **128** and the vehicle ECU **124** can be used by the VCI device **128** to report its unconnected state to other systems through communication to the vehicle ECU **124.** However, it is desired that the VCI device **128** be able to be authorized by the vehicle ECU **124** as an authorized device to prevent or mitigate unauthorized VCI-like devices from being able to request unauthorized actions to the vehicle ECU **124.**

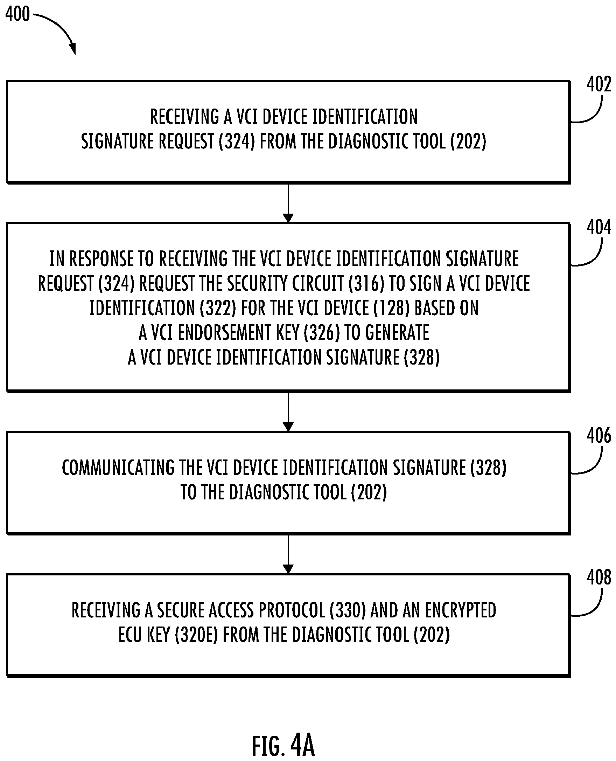

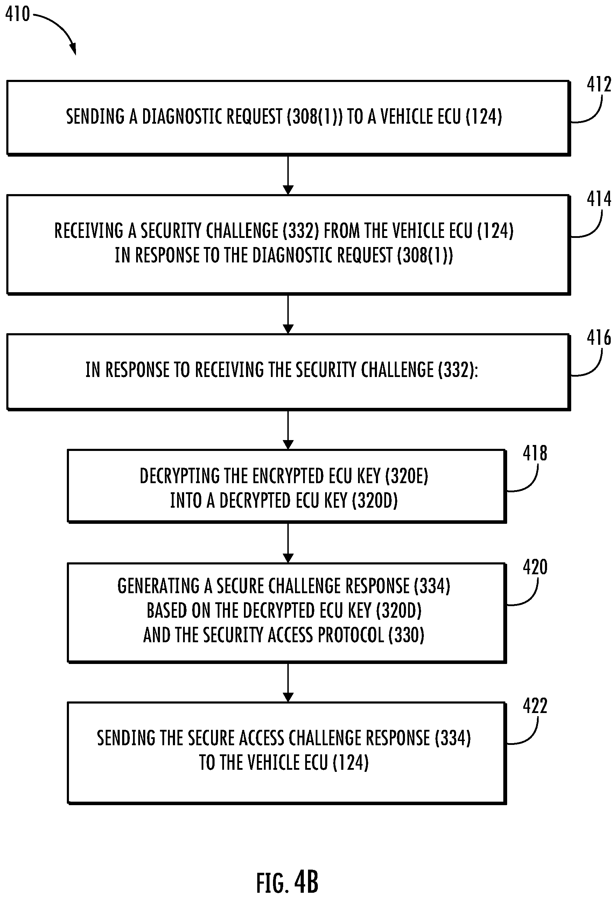

In this regard, the VCI device **128** is also capable of performing an initialization process to authorize the VCI device **128** as an authorized device to then be able to direct secure communication requests **308(1)** to the vehicle ECU **124** in a manner that can be authenticated by the vehicle ECU **124.** **FIG. 4A** is a flowchart illustrating an exemplary initialization process **400** of the diagnostic tool **202** using its connection to the VCI device **128** to authorize the VCI device **128** as being authorized to provide secure communication requests **216T(2)** to the vehicle ECU **124.** As discussed in more detail below, the diagnostic tool **202,** as part of the initialization process, is configured to provide a secure access protocol to the VCI device **128,** if authorized, to allow the VCI device **128** to mimic the diagnostic tool **202,** which is an authorized device, with the vehicle ECU **124.** This allows the VCI device **128** using the secure communication process **410** to provide authorized secure communication requests **216T(2)** to the vehicle ECU **124,** that can be authenticated by the vehicle ECU **124** as coming from an authorized device. **FIG. 4B** is a flowchart illustrating an exemplary secure communication process **410** of the VCI device **128** providing secure communication with the vehicle ECU **124** that can be authenticated by the VCI device **128** as authorized. The exemplary initialization process **400** and secure communication process **410** in **FIGS. 4A** and **4B** are discussed below in conjunction with the exemplary VCI device **128** in **FIG. 3****.**

In this regard, to facilitate secure communications between the VCI device **128** and vehicle ECU **124,** in this example, the VCI device **128** in **FIG. 3** includes a security circuit **316.** The security circuit **316** is a secure hardware circuit that is resistant to being tampered with or hacked. The security circuit may include a secure memory **318** that can be used for storage of data within the security circuit **316** and is private to the security circuit **316** and not accessible outside the security circuit **316** for security purposes. As discussed in more detail below, the security circuit **316** is configured to be used by the processing circuitry **300** to request decryption of a received encrypted ECU public key **320E** received from the diagnostic tool **202** when connected to the VCI device **128.**

When the diagnostic tool **202** is connected to the VCI device **128,** the diagnostic tool **202** can perform the initialization process **400** in **FIG. 4A** to authorize the VCI device **128** as being a device that is authorized to provide secure communication requests to the vehicle ECU **124.** In this regard, the diagnostic tool **202** can communicate with the VCI device **128** to retrieve a secure version of a VCI device identification **322** identifying the VCI device **128.** For example, the VCI device identification **322** may be a unique serial number of the VCI device **128.** In this regard, the diagnostic tool **202** can communicate a VCI device identification signature request **324** to the VCI device **128** that is received by the VCI device **128** (block **402** in **FIG. 4A****).** In response to the VCI device **128** receiving the VCI device identification signature request **324,** the processing circuitry **300** of the VCI device **128** can request the security circuit **316** to sign the VCI device identification **322** for the VCI device **128** based on a VCI private endorsement key **326** to generate a VCI device identification signature **328** (block **404** in **FIG. 4A****).** The VCI device **128** can then communicate the VCI device identification signature **328** to the diagnostic tool **202** (block **406** in **FIG. 4A****).** The diagnostic tool **202** can then communicate the secure VCI device identification **322** to the remote system **220** (see **FIG. 2****),** to authorize the VCI device **128.**

As discussed below, the VCI device **128** could be registered ahead of time by the manufacturer of the VCI device **128** with the remote system **220** as an authorized device, with the remote system **220** storing a VCI public endorsement key of the VCI device **128** as part of a VCI public endorsement key / VCI private endorsement key **326** pair assigned to the VCI device **128.** The security circuit **316** has secure access to the VCI private endorsement key **326** for its VCI device **128,** which may be stored in the secure memory **318.** If the VCI device **128** is authorized by the remote system **220,** the diagnostic tool **202** can then provide a secure access protocol **330** (e.g., a messaging protocol and/or an encryption/decryption algorithm or process (e.g., SHA-256, Equihash)) and the encrypted ECU public key **320E** that was encrypted by the vehicle ECU **124** using the VCI device public endorsement key (see block **408** in **FIG. 4A****).** The processing circuitry **300** can then store the secure access protocol **330** and the encrypted ECU public key **320E** in memory **304** to be used for the processing circuity **300** of the VCI device **128** to generate communication requests **308(1)** securely to the vehicle ECU **124.**

Then, after the VCI device **128** is authorized using the above discussed initialization process **400** through communication with a connected diagnostic tool **202,** the VCI device **128** can perform the secure communication process **410** in **FIG. 4B** to be able to directly communicate secure communication requests **216T(2)** in an authorized manner to the vehicle ECU **124.** In this regard, the VCI device **128** can send a diagnostic request as a secure communication request **308(1)** to the vehicle ECU **124** (block **412** in **FIG. 4B****).** In response, the VCI device **128** receives a security challenge **332** from the vehicle ECU **124** (block **414** in **FIG. 4B****).** In response to receiving the security challenge **332** from the vehicle ECU **124** (block **416** in **FIG. 4B****),** the VCI device **128** is configured to execute the secure access protocol **330** previously received from the diagnostic tool **202** in the initialization process to be able to generate a security challenge response **334** to be communicated as a secure communication request **216T(2)** to the vehicle ECU **124** that can be authenticated as coming from an authorized VCI device **128.**

In this regard, in an example and as discussed below, the processing circuitry **300** uses a decrypted version of the ECU public key **320E** to generate the security challenge response **334** to be communicated to the vehicle ECU **124** to authenticate the VCI device **128** The processing circuitry **300** provides a request **336** to the security circuit **316** in response to the VCI device **128** and the processing circuity **300** receiving a security challenge **332** as a secure communication request **216T(1)** from the vehicle ECU **124** in response to the VCI device **128** providing the diagnostic request **308(1)** to the vehicle ECU **124** (block **416** in **FIG. 4B****).** The request **336** from the processing circuitry **300** is to have the security circuit **316** generate the security challenge response **334.** The security circuit **316** decrypts the encrypted ECU public key **320E** into a decrypted ECU public key **320D** (block **418** in **FIG. 4B****).** The security circuit **316** generates the security challenge response **334** that includes the VCI device identification **322** using the decrypted ECU public key **320D** decrypted from the encrypted ECU public key **320E** (block **420** in **FIG. 4B****).** This is so that the vehicle ECU **124** can use its ECU private key to authenticate the security challenge response **334** to authorize the VCI device **128.** In this manner, the decrypted ECU public key **320D** is secure within the security circuit **316** for security reasons so that such cannot be hacked to allow unauthorized parties to program their VCI device to act as authorized devices. As discussed above, the encrypted ECU public key **320E** was encrypted by the vehicle ECU **124** using the VCI public endorsement key for the VCI device **128.** Thus, the security circuit **316** can use the VCI private endorsement key **326** to unencrypt the encrypted ECU public key **320E** and generate the security challenge response **334** using the decrypted ECU public key **320D.** The security circuit **316** can use the secure access protocol **330** provided from the diagnostic tool **202** in the initialization process discussed above to perform the decryption of the encrypted ECU public key **320E** and then encrypt the security challenge response **334** based on the secure access protocol **330.** The processing circuity **300** can then send the security challenge response **334** to the vehicle ECU **124** as a communication request **216T(2)** to have the vehicle ECU **124** authorize the VCI device **128** (block **422** in **FIG. 4B****).**

The vehicle ECU **124** can use its ECU private key associated with the ECU public key **320D** to decrypt the security challenge response **334** to obtain the VCI device identification **322.** The vehicle ECU **124** can then determine if the VCI device **128** is authorized as an authorized device based on the VCI device identification **322.** The VCI device identification **322** of the authorized VCI device **128** was previously registered in the registration process discussed above. If authorized, the vehicle ECU **124** can issue another, second security challenge response **338** to the VCI device **128** to indicate authorization of the VCI device **128,** so that the VCI device **128** can then issue its diagnostic request as a second diagnostic request to be serviced by the vehicle ECU **124.**

In this manner, by the VCI device **128** being able to be authorized through the diagnostic tool **202** to receive the secure access protocol **330** necessary for the VCI device **128** to communicate secure requests to the vehicle ECU **124,** this prevents or mitigates unauthorized VCI-like devices from being able to communicate requests to the vehicle ECU **124** in an unauthorized manner. Also, by the VCI device **128** being able to be authorized through communication with the diagnostic tool **202** to receive the secure access protocol **330** for secure communications to a connected vehicle ECU **124,** the VCI device **128** can mimic the secure diagnostic behavior of the diagnostic tool **202** by leveraging the pre-existing diagnostic infrastructure to communicate with the vehicle ECU **124** in a secure manner. In this manner, this flexibility in the VCI device **128** being able to receive the secure access protocol **330** through the diagnostic tool **202** allows the VCI device **128** to have secure communications with the vehicle ECU **124** without the VCI device **128** having to be vehicle ECU manufacturer specific, and without the vehicle ECU **124** having to be altered to provide specialized security features specific to the manufacturer of the VCI device **128.**

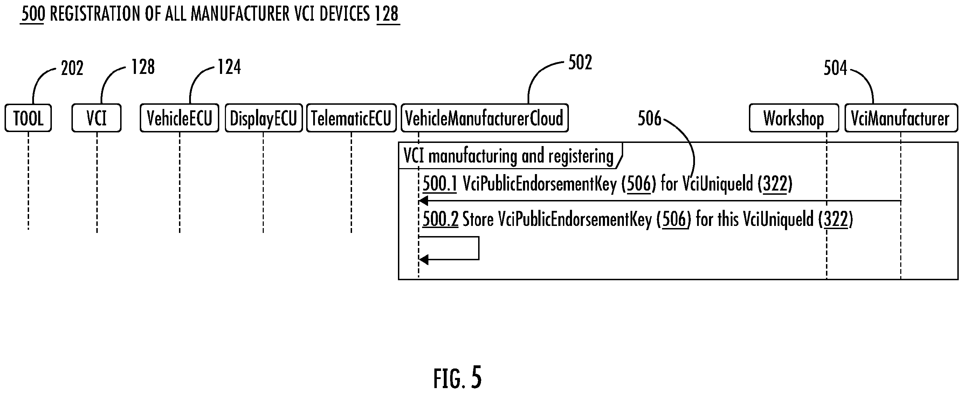

**FIGS. 5-10** discussed below are additional exemplary processes with additional exemplary detail that can be performed involving the VCI device **128** being able to be authorized as part of an initialization process, through communication with the diagnostic tool **202,** to perform secure communication requests to a connected vehicle ECU **124.** The communication flows and processes in **FIGS. 5-10** will now be discussed.

In this regard, **FIG. 5** is a communication flow / process chart illustrating an exemplary VCI device **128** registration process **500** between an authorized ECU agent **502,** such as the vehicle manufacturer of the vehicle ECU **124,** and a VCI manufacturer **504** of a VCI device **128.** For example, as discussed above, it may be desired for the VCI device **128** to be registered with an authorized ECU agent **502** of the vehicle ECU **124** so that the vehicle ECU **124** has a way to determine if a vehicle ECU **124** is authorized through a later performed initialization process by the VCI device **128** with a connected diagnostic tool **202.** In this regard, in this example, a VCI manufacturer **504** of the VCI device **128** communicates the VCI device identification **322** and the VCI public endorsement key **506** (that is paired with the VCI private endorsement key **326)** to the authorized ECU agent **502** (block **500.1** in **FIG. 5****).** For example, the authorized ECU agent **502** may be provided in **FIG. 5** on a server or remote location and have the capability of communication with a vehicle ECU **124.** The authorized ECU agent **502** stores the VCI device identification **322** and the VCI public endorsement key **506** (block **500.2** in **FIG. 5****).** This is so that later when a request relating to initialization of a VCI device **128** is received, the authorized ECU agent **502** can use the stored VCI device identification **322** to authorize the VCI device **128** being initialized and use the VCI public endorsement key **506** to encrypt the ECU public key **320E** to be provided securely to the VCI device **128** to use to generate the security challenge response **334** and subsequent authorized communication requests **308(1)** (e.g., diagnostic requests) to the vehicle ECU **124** to be serviced.

Note that certain VCI devices **128** may be associated with a particular location or vehicle workshop. Thus, it may be desired to also configure (i.e., associate) particular registered VCI devices **128,** using the registration process **500** in **FIG. 5** so that a diagnostic tool **202** connected to a VCI device **128** at its location or workshop can determine the VCI device **128** is associated with such location or workshop. This may be useful in authorizing connected VCI devices **128** as part of the initialization process for a connected VCI device **128,** as discussed above.

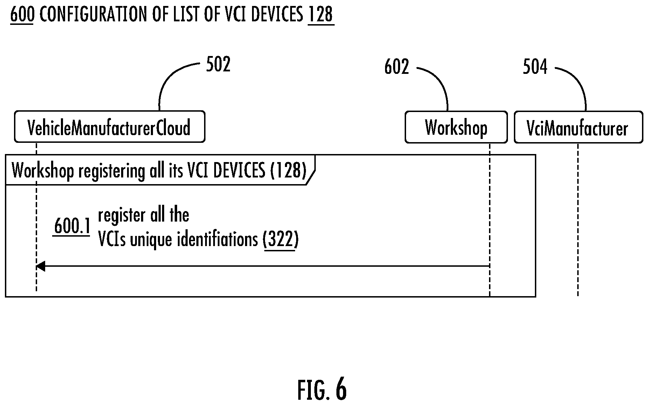

In this regard, **FIG. 6** is a communication flow / process chart illustrating an exemplary configuration process **600** between a vehicle workshop **602** and the authorized ECU agent **502** to report VCI devices **128** that are authorized or expected to be used in the vehicle workshop **602.** In this regard, the vehicle workshop **602** communicates the VCI device identification **322** of authorized or expected VCI devices **128** to be used in the vehicle workshop **602** to the authorized ECU agent **502** (block **600.1** in **FIG. 6****).** This is so that later when a request relating to initialization of a VCI device **128** is received, the authorized ECU agent **502** can use the stored VCI device identification **322** to further authorize the VCI device **128** being initialized based on the vehicle workshop **602** where the diagnostic tool **202** is connected to the VCI device **128.**

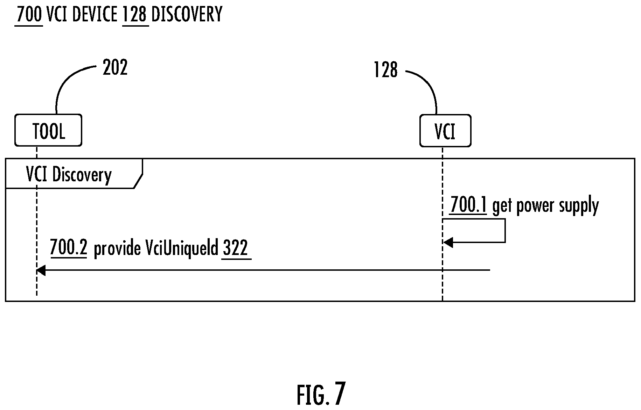

When a VCI device **128** is connected to a diagnostic tool **202** and powered on or reset, the VCI device **128** can be configured to provide its VCI device identification **322** to the diagnostic tool **202** to identify itself to the diagnostic tool **202** as part of a discovery process. In this regard, **FIG. 7** is a communication flow / process illustrating an exemplary discovery process **700** between a VCI device **128** and the diagnostic tool **202** for the VCI device **128** to communicate its VCI device identification **322** to the diagnostic tool **202.** In this regard, when the VCI device **128** is powered on or reset and connected to a diagnostic tool **202** (block **700.1** in **FIG. 7****),** the VCI device **128** communicates the VCI device identification **322** to the diagnostic tool **202** (block **700.2** in **FIG. 7****).**

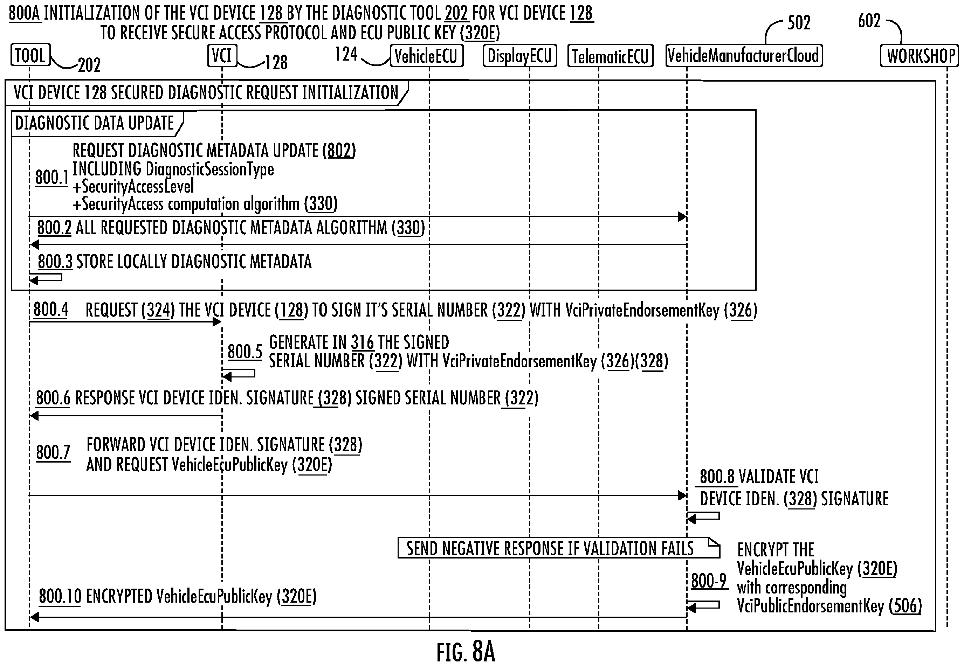

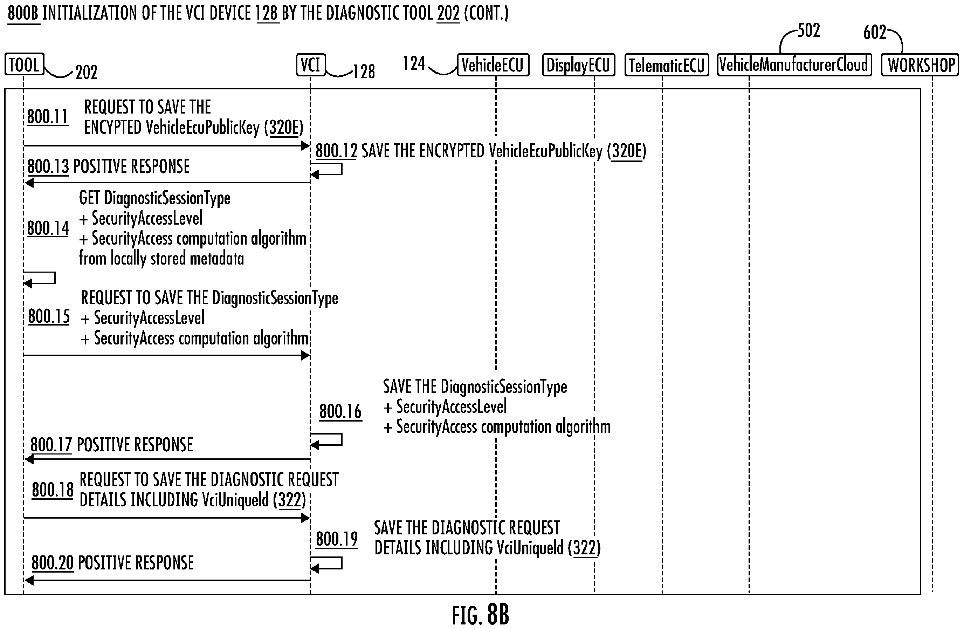

**FIGS. 8A** and **8B** are a communication flow / process illustrating another exemplary initialization process **800** of initializing the VCI device **128** to authenticate the VCI device **128** as an authorized device to provide secure communications to the vehicle ECU **124.** The initialization process **800** in **FIGS. 8A** and **8B** is similar to the exemplary initialization process **400** in **FIG. 4A****,** but the initialization process **800** in **FIGS. 8A** and **8B** includes more exemplary detail.

In this regard, as illustrated in **FIG. 8A****,** after the diagnostic tool **202** receives the VCI device identification **322** from a connected VCI device **128** (see block **700.2** in **FIG. 7****),** the diagnostic tool **202** communicates a secure diagnostic update **802** to the authorized ECU agent **502** to perform a diagnostic update to obtain any updates to the secure access protocol **330** (block **800.1** in **FIG. 8A****).** This is in case there have been any updates to the secure access protocol **330** since the diagnostic tool **202** last received the secure access protocol **330** to perform secure communications with the vehicle ECU **124.** In this example, the secure diagnostic update **802** is communicated to retrieve all diagnostic metadata except the ECU public key **302E.** The authorized ECU agent **502** provides any updates to the secure access protocol **330** (block **800.2** in **FIG. 8A****),** which is then stored by the diagnostic tool **202** (block **800.3** in **FIG. 8A****),** for later use in communication with the vehicle ECU **124** through the VCI device **128.**

Then, to begin the initialization process of authorizing the connected VCI device **128,** the diagnostic tool **202** communicates a VCI device identification signature request **324** to the VCI device **128** to request that it sign its VCI device identification **322** with its VCI private endorsement key **326** (block **800.4** in **FIG. 8A****).** As previously discussed by example in **FIG. 3****,** the VCI device **128** can call upon its security circuit **316** to use the securely stored VCI private endorsement key **326** to sign its VCI device identification **322** (block **800.5** in **FIG. 8A****).** Because the VCI public endorsement key **506** was previously registered with the authorized ECU agent **502,** as discussed below, the authorized ECU agent **502** will be able to authenticate the VCI device identification **322** to then indicate to the diagnostic tool **202** whether the VCI device **128** is authorized based on registered authorized VCI devices **128** based on their registered VCI device identifications **322.** After the VCI device **128** generates the VCI device identification signature **328** (block **800.5** in **FIG. 8A****),** which is then communicated by the VCI device **128** to the diagnostic tool **202** (block **800.6** in **FIG. 8A****).** The diagnostic tool **202** then forwards the VCI device identification signature **328** to the authorized ECU agent **502** to validate the VCI device identification signature **328** (block **800.7** in **FIG. 8A****).** The authorized ECU agent **502** validates the VCI device identification signature **328** based on the previously received and stored VCI public endorsement key **506** and VCI device identification **322** associated with the stored VCI public endorsement key **506** as part of the registration process (see registration process **500** in **FIG.** 5) (block **800.8** in **FIG. 8A****).** If the VCI device identification signature **328** is validated, this means that the VCI device **128** associated with the VCI device identification **322** signed in the VCI device identification signature **328** is authorized and permitted to make secure direct communication requests to the vehicle ECU **124.** In this regard, to provide the credentials back to the VCI device **128** to use to be able to securely communicate requests to the vehicle ECU **124,** the authorized ECU agent **502** encrypts the vehicle ECU public key as an encrypted vehicle ECU public key **320E** with the VCI public endorsement key **506** (block **800.9** in **FIG. 8A****),** and communicates the encrypted vehicle ECU public key **320E** back to the diagnostic tool **202** (block **800.10** in **FIG. 8A****).**

Then, as shown in a continuing of the initialization process **800** in **FIG. 8B****,** the diagnostic tool **202** sends a request to the VCI device **128** to store the encrypted ECU public key **320E** (block **800.11** in **FIG. 8B****).** The VCI device **128** stores the encrypted ECU public key **320E** (block **800.12** in **FIG. 8B****)** and provides an acknowledgement response to the diagnostic tool **202** of a successful receipt and storage of the encrypted ECU public key **320E** (block **800.13** in **FIG. 8B****).** For example, the VCI device **128** can store the encrypted ECU public key **320E** in its memory **304** as previously discussed with regard to **FIG. 3****.** The VCI device **128** will later decrypt the encrypted ECU public key **320E** using its VCI private endorsement key **326** to then use such to provide secure communication requests to the vehicle ECU **124** that can be authenticated based on the VCI device **128** having had access to the decrypted ECU public key **320D.** The fact that the authorized ECU agent **502** had registered access to the VCI public endorsement key **506** for the VCI device **128,** that was then used to encrypt the ECU public key **302E,** means that the VCI device **128** can decrypt the encrypted ECU public key **302E** using its paired VCI private endorsement key **326.** Also in this example, it is this knowledge of the VCI public endorsement key **506** by the authorized ECU agent **502** that allows the VCI device **128** to later decrypt the encrypted ECU public key **302E** using its paired VCI private endorsement key **326.** It is then the ability of the VCI device **128** to have access to the decrypted ECU public key **320D,** that allows the vehicle ECU **124** to authorize a direct communication request from the VCI device **128** based on having access to the ECU private key associated with the decrypted ECU public key **320D.**

Also, now that the diagnostic tool **202** has been able to know that the VCI device **128** is authorized, the diagnostic tool **202** can provide the secure access protocol **330** to the VCI device **128** so that it can use such to later formulate secure diagnostic requests to the vehicle ECU **124.** In this regard, the diagnostic tool **202** will retrieve the previously stored and updated secure access protocol **330** (block **800.14** in **FIG. 8B****).** The diagnostic tool **202** will communicate a request to the VCI device **128** to store the secure access protocol **330** (block **800.15** in **FIG. 8B****)** for later use to formulate secure diagnostic requests to the vehicle ECU **124** using the secure access protocol **330** and the decrypted ECU public key **320D.** In response, the VCI device **128** stores the secure access protocol **330** received from the diagnostic tool **202** (block **800.16** in **FIG. 8B****),** and provides an acknowledgement response to the diagnostic tool **202** of a successful receipt and storage of the secure access protocol **330** (block **800.17** in **FIG. 8B****).** The diagnostic tool **202** then sends a request to the VCI device **128** to save a diagnostic request that includes the VCI device identification **322** (block **800.18** in **FIG. 8B****),** which is then saved by the VCI device **128** (block **800.19** in **FIG. 8B****)** and acknowledged back to the diagnostic tool **202** (block **800.20** in **FIG. 8B****).**

At this point, after performing the initialization processes **800A-800B** in **FIGS. 8A** and **8B****,** an authorized VCI device **128** now has the necessary secure access protocol **330** and the ability to decrypt the ECU public key **320E** to then formulate a secure communication request to the vehicle ECU **124** which can be authenticated based on the VCI device **128** having access to the decrypted ECU public key **320D.**

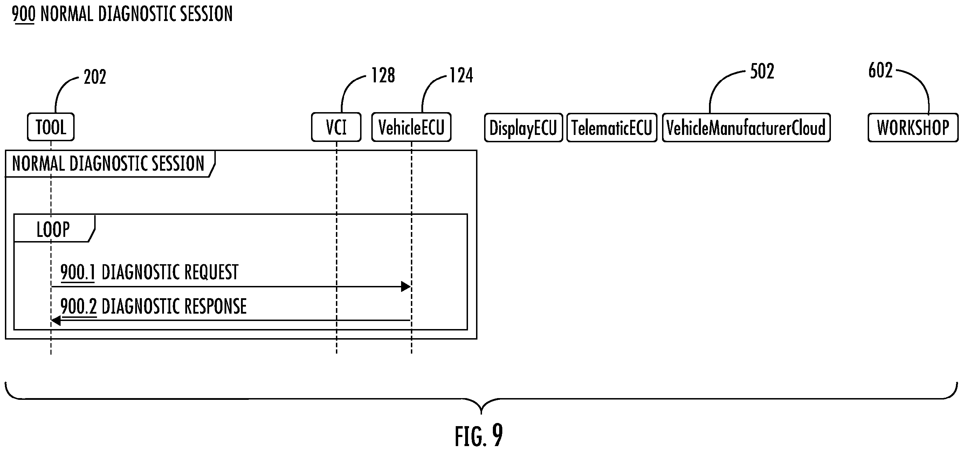

The diagnostic tool **202** can perform its normal diagnostic functions through communication to the vehicle ECU **124** using the connected VCI device **128** as an intermediate device. In this regard, **FIG. 9** is an exemplary communication flow / process for a normal diagnostic session between the diagnostic tool **202** and the vehicle ECU **124** using the VCI device **128** as an intermediary device. As shown in **FIG. 9****,** the diagnostic tool **202** can issue a diagnostic request to VCI device **128,** which is then forwarded to the vehicle ECU **124** (block **900.1** in **FIG. 9****).** The diagnostic tool **202** has access to the secure access protocol **330** to be able to send secure communication requests to the vehicle ECU **124,** which can be authenticated by the vehicle ECU **124.** The vehicle ECU **124** can provide responses back to the diagnostic tool **202** using the VCI device **128** as an intermediary device (block **900.2** in **FIG. 9****).**

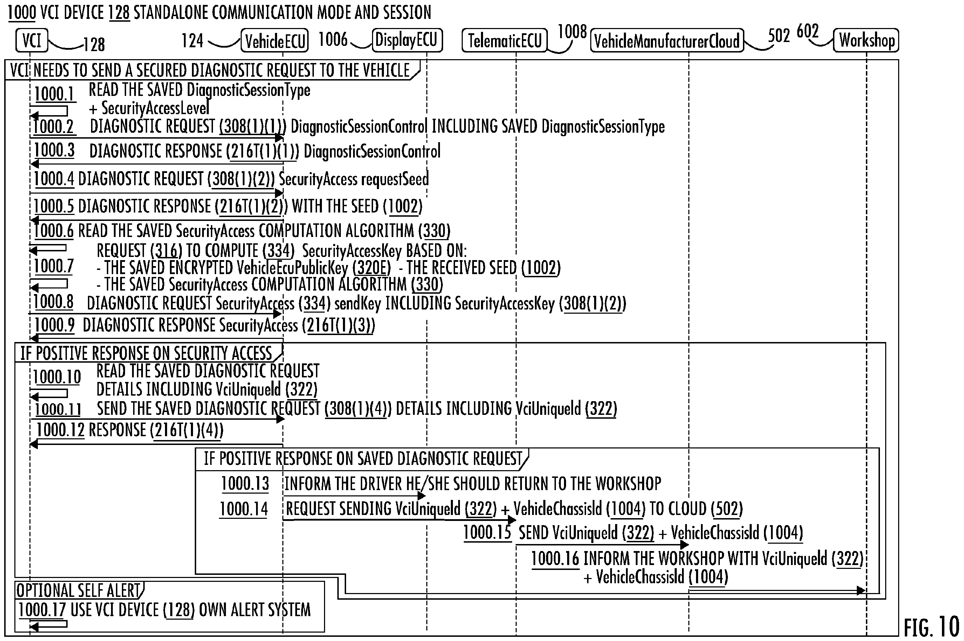

**FIG. 10** is an exemplary communication flow / process of a VCI device **128** directly communicating requests (e.g., diagnostic requests) with a connected vehicle ECU **124,** such that the vehicle ECU **124** can authorize the VCI device **128** and then provide responses to the VCI device **128** in response to such requests if authenticated. For example, the VCI device **128** may be configured to directly communicate diagnostic requests to the vehicle ECU **124** in response to and/or when the VCI device **128** connected to the vehicle **100** is no longer being connected to the diagnostic tool **202.** In this regard, as shown in **FIG. 10****,** in this example, when the VCI device **128** desires to send a direct diagnostic request **308(1)** to a connected vehicle ECU **124** in a communication session, the VCI device **128** can read a saved diagnostic session type and security access level to be included in the diagnostic request (block **1000.1** in **FIG. 10****).** This diagnostic request **308(1)** can be a pre-defined diagnostic request, such as a loss prevention command. The VCI device **128** can then send a first diagnostic request **308(1)(1)** for a diagnostic communication session to the vehicle ECU **124** based on the diagnostic session type (block **1000.2** in **FIG. 10****).** In response, the vehicle ECU **124,** not knowing if the first diagnostic request **308(1)(1)** for a diagnostic communication session is from an authorized VCI device **128,** will send a first security challenge **216T(1)(1)** back to the VCI device **128** (block **1000.3** in **FIG. 10****).** In response, in this example, the VCI device **128** will send another diagnostic request **308(1)(2)** in this example for a seed **1002** to the vehicle ECU **124** (block **1000.4** in **FIG. 10****).** The seed **1002** is a number or identifier that will be later used by the VCI device **128** to create a secure diagnostic request that can be authenticated by the vehicle ECU **124.** This diagnostic request **308(1)(2)** can also be a pre-defined diagnostic request, such as a loss prevention command. The vehicle ECU **124** sends the seed **1002** back to the VCI device **128** as part of a second security challenge response **216T(2)** (block **1000.5** in **FIG. 10****).**

With continuing reference to **FIG. 10****,** the VCI device **128** will then access the secure access protocol **330** that is saved in memory (e.g., memory **304** in **FIG. 3****)** (block **1000.6** in **FIG. 10****).** The VCI device **128** will request the security circuit **316** to generate a security challenge response **334** based on a decrypted ECU public key **320E,** the seed **1002,** and the secure access protocol **330** (block **1000.7** in **FIG. 10****).** As discussed above, to decrypt and protect the ECU public key **320D** from exposure outside of the security circuit **316,** the security circuit **316** will decrypt the ECU public key **320E** using the VCI private endorsement key **326** accessible by the security circuit **316.** The VCI device **128** will then send the security challenge response **334** as another diagnostic request **308(1)(3)** to the vehicle ECU **124** (block **1000.8** in **FIG. 10****).** The vehicle ECU **124** will then authenticate the security challenge response **334** and if valid, send another, second security challenge **216T(1)(3)** back to the VCI device **128** indicating that the security challenge response **334** has been authenticated, meaning the VCI device **128** is authorized for the vehicle ECU **124** to service future direct diagnostic requests from the VCI device (block **1000.9** in **FIG. 10****).** The vehicle ECU **124** is able to authenticate the security challenge response **334** using the vehicle ECU private key paired with the vehicle ECU public key **320D.**

With continuing reference to **FIG. 10****,** now that the vehicle ECU **124** has been able to authorize the VCI device **128** as being able to read its VCI device identification **322** from memory (e.g., memory **304)** (block **1000.10** in **FIG. 10****),** the VCI device **128** will send the desired diagnostic request **308(1)(4)** that includes its VCI device identification **322** to the vehicle ECU **124** to be serviced (block **1000.11** in **FIG. 10****).** The vehicle ECU **124** will determine if the diagnostic request **308(1)(4)** is authorized based on determining if the VCI device identification **322** is associated with the prior communication session that authorized the VCI device **128** (block **1000.12** in **FIG. 10****).** If the vehicle ECU **124** determines the diagnostic request **308(1)(4)** is authorized, the vehicle ECU **124** will send a security challenge response **216T(1)(4)** indicating the diagnostic request **308(1)(4)** is authorized (block **1000.12** in **FIG. 10****).** The vehicle ECU **124** will then handle the diagnostic request **308(1)(4)** and respond as requested to the VCI device **128.**

For example, if the diagnostic request **308(1)(4)** is a VCI device loss prevention command to indicate an unconnected state of the diagnostic tool **202** to the VCI device **128,** the vehicle ECU **124** can inform the driver that they should return to the vehicle workshop **602** to have the VCI device **128** removed from their vehicle **100** (block **1000.13** in **FIG. 10****).** For example, the vehicle ECU **124** may be configured to display this message to the driver through a display **1006** in the vehicle **100.** The vehicle ECU **124** can also send a communication message to a telematics system **1008** that can exchange communications with the vehicle **100** (e.g., such as through a radio or cellular communication system) of the VCI device identification **322** and its vehicle chassis identification **1004** of the vehicle **100** associated with the VCI device **128,** to indicate the VCI device **128** has been left connected to the vehicle **100** (block **1000.14** in **FIG. 10****).** The telematics system **1008** can then communicate the VCI device identification **322** and its vehicle chassis identification **1004** of the vehicle **100** to the authorized ECU agent **502** for example (block **1000.15** in **FIG. 10****),** which can then report this information to the vehicle workshop **602** that the VCI device **128** has been left connected to the vehicle **100** (block **1000.16** in **FIG. 10****).** As another option, the VCI device **128** could also generate its own alert to the driver of the vehicle **100** of the unconnected state, such as through a speaker or other noise generator or visual indicator (block **1000.17** in **FIG. 10****).**

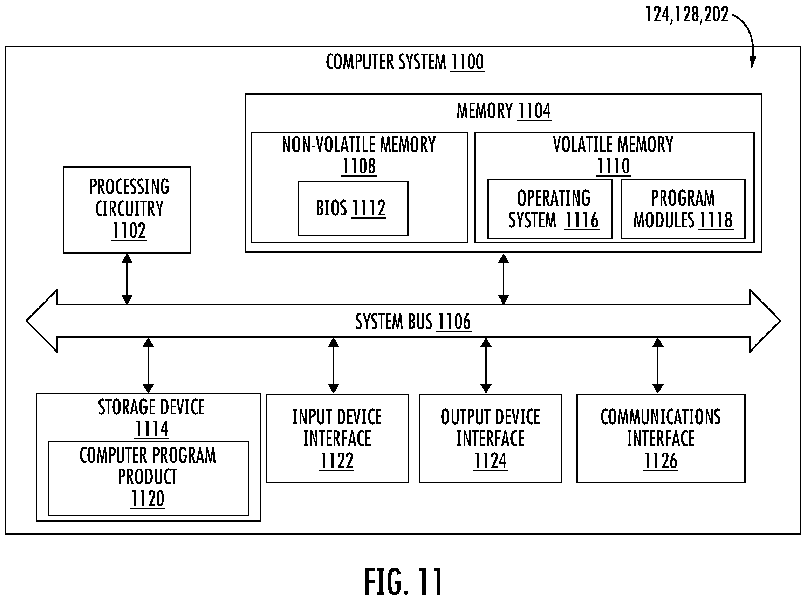

**FIG. 11** is a block diagram of a computer system **1100** for implementing any examples disclosed herein. For example, the VCI device **128,** the vehicle ECU **124,** and/or the diagnostic tool **202** could each be provided by the computer system **1100** in **FIG. 11****.** The computer system **1100** is adapted to execute instructions from a computer-readable medium to perform these and/or any of the functions or processing described herein. The computer system **1100** may be connected (e.g., networked) to other machines in a LAN, an intranet, an extranet, or the Internet. While only a single device is illustrated, the computer system **1100** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or j ointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **1100** may comprise at least one computing device or electronic device capable of including firmware, hardware, and/or executing software instructions to implement the functionality described herein. The computer system **1100** may include processing circuitry **1102** (e.g., a processor including one or more processor devices or control units), a memory **1104,** and a system bus **1106.** The processing circuitry **1102** could be the processing circuitry **300** in **FIG. 3****,** as an example, if the computer system **1100** was the VCI device **128.** The computer system **1100** may include at least one computing device having the processing circuitry **1102.** The system bus **1106** provides an interface for system components including, but not limited to, the memory **1104** and the processing circuitry **1102.** The memory **1104** could be the memory **304** in **FIG.** 3 as an example, if the computer system **1100** was the VCI device **128.** The processing circuitry **1102** may include any number of hardware components for conducting data or signal processing or for executing computer code stored in memory **1104.** The processing circuitry **1102** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **1102** may further include computer executable code that controls operation of the programmable device.

The system bus **1106** may be any of several types of bus structures that may further interconnect to a memory bus (with or without a memory controller), a peripheral bus, and/or a local bus using any of a variety of bus architectures. The memory **1104** may be one or more devices for storing data and/or computer code for completing or facilitating methods described herein. The memory **1104** may include database components, object code components, script components, or other types of information structure for supporting the various activities herein. Any distributed or local memory device may be utilized with the systems and methods of this description. The memory **1104** may be communicably connected to the processing circuitry **1102** (e.g., via a circuit or any other wired, wireless, or network connection) and may include computer code for executing one or more processes described herein. The memory **1104** may include non-volatile memory **1108** (e.g., read-only memory (ROM), erasable programmable read-only memory (EPROM), electrically erasable programmable read-only memory (EEPROM), etc.), and volatile memory **1110** (e.g., random-access memory (RAM)), or any other medium which can be used to carry or store desired program code in the form of machine-executable instructions or data structures and which can be accessed by a computer or other machine with processing circuitry **1102.** A basic input/output system (BIOS) **1112** may be stored in the non-volatile memory **1108** and can include the basic routines that help to transfer information between elements within the computer system **1100.**

The computer system **1100** may further include or be coupled to a non-transitory computer-readable storage medium such as the storage device **1114,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **1114** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **1114** and/or in the volatile memory **1110,** which may include an operating system **1116** and/or one or more program modules **1118.** All or a portion of the examples disclosed herein may be implemented as a computer program **1120** stored on a transitory or non-transitory computer-usable or computer-readable storage medium (e.g., single medium or multiple media), such as the storage device **1114,** which includes complex programming instructions (e.g., complex computer-readable program code) to cause the processing circuitry **1102** to carry out actions described herein. Thus, the computer-readable program code of the computer program **1120** can comprise software instructions for implementing the functionality of the examples described herein when executed by the processing circuitry **1102.** In some examples, the storage device **1114** may be a computer program product (e.g., readable storage medium) storing the computer program **1120** thereon, where at least a portion of a computer program **1120** may be loadable (e.g., into a processor or processing circuitry) for implementing the functionality of the examples described herein when executed by the processing circuitry **1102.** The processing circuitry **1102** may serve as a controller or control system for the computer system **1100** that is to implement the functionality described herein.

The computer system **1100** may include an input device interface **1122** configured to receive input and selections to be communicated to the computer system **1100** when executing instructions, such as from a keyboard, mouse, touch-sensitive surface, etc. Such input devices may be connected to the processing circuitry **1102** through the input device interface **1122** coupled to the system bus **1106** but can be connected through other interfaces, such as a parallel port, an Institute of Electrical and Electronic Engineers (IEEE) 1394 serial port, a Universal Serial Bus (USB) port, an IR interface, and the like. The computer system **1100** may include an output device interface **1124** configured to forward output, such as to a display, a video display unit (e.g., a liquid crystal display (LCD) or a cathode ray tube (CRT)). The computer system **1100** may include a communications interface **1126** suitable for communicating with a network as appropriate or desired. The communications interface **1126** could be the vehicle communication interface circuit **306** and/or the diagnostic tool communication interface circuit **314** in **FIG. 3** as an example, if the computer system **1100** was the VCI device **128.**

The operational actions described in any of the exemplary aspects herein are described to provide examples and discussion. The actions may be performed by hardware components, may be embodied in machine-executable instructions to cause a processor or processing circuitry to perform the actions, or may be performed by a combination of hardware and software. Although a specific order of method actions may be shown or described, the order of the actions may differ. In addition, two or more actions may be performed concurrently or with partial concurrence.

Implementation examples are described in the following numbered clauses:
Example 1: A vehicle communication interface (VCI) device, comprising:
   a security circuit comprising a secure memory; and
   a processing circuitry communicatively coupled to the security circuit;
   the processing circuitry configured to:
      receive a secure access protocol and an encrypted electronic control unit (ECU) key from a diagnostic tool;
      send a diagnostic request to a vehicle ECU;
      receive a security challenge from the vehicle ECU in response to the diagnostic request; and
      in response to receiving the security challenge:
         request the security circuit to decrypt the encrypted ECU key into a decrypted ECU key and generate a security challenge response based on the decrypted ECU key and the secure access protocol; and
         send the security challenge response to the vehicle ECU.
Example 2: The VCI device of claim 1, wherein the security circuit is configured to:
   decrypt the encrypted ECU key based on the encrypted ECU key; and
   generate the security challenge response based on the decrypted ECU key and the secure access protocol.
Example 3: The VCI device of any of claims 1-2, wherein the processing circuitry is further configured to:
   receive a second security challenge from the vehicle ECU in response to sending the security challenge response to the vehicle ECU; and
   in response to the second security challenge indicating authorization of the VCI device:
      send a second diagnostic request based on the first diagnostic request to the vehicle ECU.
Example 4: The VCI device of any of claims 1-3, wherein the processing circuitry is further configured to:
   detect if the diagnostic tool is not connected to the VCI device; and
   in response to detecting the diagnostic tool not connected to the VCI device:
      send the diagnostic request to the vehicle ECU.
Example 5: The VCI device of claim 4, wherein the diagnostic request comprises a VCI device loss prevention command.
Example 6: The VCI device of any of claims 1-5, wherein the processing circuitry is further configured to:
   receive a VCI device identification signature request from the diagnostic tool; and
   in response to receiving the VCI device identification signature request, request the security circuit to sign a VCI device identification for the VCI device based on a VCI endorsement key.
Example 7: The VCI device of claim 6, wherein the VCI device identification comprises a unique serial number of the VCI device.
Example 8: The VCI device of any of claims 1-7, wherein the processing circuitry is further configured to:
   receive a request from the diagnostic tool to store the encrypted ECU key; and
   in response to receiving the request to store the encrypted ECU key, store the encrypted ECU key in a memory accessible by the processing circuitry.
Example 9: The VCI device of claim 8, wherein the processing circuitry is further configured to:
   receive a request from the diagnostic tool to store the secure access protocol after receiving the request to store the encrypted ECU key; and
   in response to receiving the request to store the secure access protocol, store the secure access protocol in the memory.
Example 10: The VCI device of any of claims 1-9, wherein the processing circuitry is configured to:
   receive the security challenge comprising a seed from the vehicle ECU in response to sending the diagnostic request to the vehicle ECU; and
   in response to receiving the security challenge, request the security circuit to generate the security challenge response based on the seed, the decrypted ECU key, and the secure access protocol.
Example 11: The VCI device of any of claims 1-10, wherein the processing circuitry is further configured to establish a communication session with the diagnostic tool connected to the VCI device;
   the processing circuitry configured to receive the secure access protocol and the encrypted ECU key in the communication session.
Example 12: The VCI device of any of claims 1-11, further comprising a vehicle connector configured to be connected to a vehicle communication port communicatively coupled to the vehicle ECU;
   wherein:
   the processing circuitry is communicatively coupled to the vehicle connector; and
   the processing circuitry is configured to:
      send the diagnostic request through the vehicle connector to the vehicle ECU;
      receive the security challenge through the vehicle connector from the vehicle ECU in response to the diagnostic request; and
      send the security challenge response through the vehicle connector to the vehicle ECU.
Example 13: A computer-implemented method of authorizing a vehicle communication interface (VCI) device with a vehicle electronic control unit (ECU) to allow for the VCI device to provide secure requests to the vehicle ECU, comprising the VCI device:
   receiving a secure access protocol and an encrypted ECU key from a diagnostic tool;
   sending a diagnostic request to the vehicle ECU;
   receiving a security challenge from the vehicle ECU in response to the diagnostic request; and
   in response to receiving the security challenge:
      decrypting the encrypted ECU key into a decrypted ECU key;
      generating a security challenge response based on the decrypted ECU key and the secure access protocol; and
      sending the security challenge response to the vehicle ECU.
Example 14: The method of claim 13, further comprising:
   receiving a second security challenge from the vehicle ECU, in response to sending the security challenge response to the vehicle ECU; and
   sending a second diagnostic request based on the first diagnostic request to the vehicle ECU, in response to the second security challenge indicating authorization of the VCI device.
Example 15: The method of any of claims 13-14, further comprising:
   detecting if the diagnostic tool is not connected to the VCI device; and
   in response to detecting the diagnostic tool not connected to the VCI device: sending the diagnostic request to the vehicle ECU.
Example 16: The method of any of claims 13-15, further comprising:
   receiving a VCI device identification signature request from the diagnostic tool; and
   signing a VCI device identification for the VCI device based on a VCI endorsement key, in response to receiving the VCI device identification signature request.
Example 17: The method of any of claims 13-16, wherein:
   receiving the security challenge comprises receiving a seed from the vehicle ECU, in response to sending the diagnostic request to the vehicle ECU; and
   generating the security challenge response based on the seed, the decrypted ECU key, and the secure access protocol, in response to receiving the first security challenge response.
Example 18: A computer program product comprising program code for performing, when executed by the processing circuitry, the method of any of claims 13-17.
Example 19: A non-transitory computer-readable storage medium comprising instructions, which when executed by the processing circuitry, causes the processing circuitry to perform the method of any of claims 13-17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle communication interface (VCI) device, comprising:
a security circuit comprising a secure memory; and
a processing circuitry communicatively coupled to the security circuit;
the processing circuitry configured to:
receive a secure access protocol and an encrypted electronic control unit (ECU) key from a diagnostic tool;
send a diagnostic request to a vehicle ECU;
receive a security challenge from the vehicle ECU in response to the diagnostic request; and
in response to receiving the security challenge:
request the security circuit to decrypt the encrypted ECU key into a decrypted ECU key and generate a security challenge response based on the decrypted ECU key and the secure access protocol; and
send the security challenge response to the vehicle ECU.

2. The VCI device of claim 1, wherein the security circuit is configured to:
decrypt the encrypted ECU key based on the encrypted ECU key; and
generate the security challenge response based on the decrypted ECU key and the secure access protocol.

3. The VCI device of any of claims 1-2, wherein the processing circuitry is further configured to:
receive a second security challenge from the vehicle ECU in response to sending the security challenge response to the vehicle ECU; and
in response to the second security challenge indicating authorization of the VCI device:
send a second diagnostic request based on the first diagnostic request to the vehicle ECU.

4. The VCI device of any of claims 1-3, wherein the processing circuitry is further configured to:
detect if the diagnostic tool is not connected to the VCI device; and
in response to detecting the diagnostic tool not connected to the VCI device: send the diagnostic request to the vehicle ECU.

5. The VCI device of any of claims 1-4, wherein the processing circuitry is further configured to:
receive a VCI device identification signature request from the diagnostic tool; and
in response to receiving the VCI device identification signature request, request the security circuit to sign a VCI device identification for the VCI device based on a VCI endorsement key.

6. The VCI device of any of claims 1-5, wherein the processing circuitry is further configured to:
receive a request from the diagnostic tool to store the encrypted ECU key; and
in response to receiving the request to store the encrypted ECU key, store the encrypted ECU key in a memory accessible by the processing circuitry.

7. The VCI device of claim 6, wherein the processing circuitry is further configured to:
receive a request from the diagnostic tool to store the secure access protocol after receiving the request to store the encrypted ECU key; and
in response to receiving the request to store the secure access protocol, store the secure access protocol in the memory.

8. The VCI device of any of claims 1-7, wherein the processing circuitry is configured to:
receive the security challenge comprising a seed from the vehicle ECU in response to sending the diagnostic request to the vehicle ECU; and
in response to receiving the security challenge, request the security circuit to generate the security challenge response based on the seed, the decrypted ECU key, and the secure access protocol.

9. A computer-implemented method of authorizing a vehicle communication interface (VCI) device with a vehicle electronic control unit (ECU) to allow for the VCI device to provide secure requests to the vehicle ECU, comprising the VCI device:
receiving a secure access protocol and an encrypted ECU key from a diagnostic tool;
sending a diagnostic request to the vehicle ECU;
receiving a security challenge from the vehicle ECU in response to the diagnostic request; and
in response to receiving the security challenge:
decrypting the encrypted ECU key into a decrypted ECU key;
generating a security challenge response based on the decrypted ECU key and the secure access protocol; and
sending the security challenge response to the vehicle ECU.

10. The method of claim 9, further comprising:
receiving a second security challenge from the vehicle ECU, in response to sending the security challenge response to the vehicle ECU; and
sending a second diagnostic request based on the first diagnostic request to the vehicle ECU, in response to the second security challenge indicating authorization of the VCI device.

11. The method of any of claims 9-10, further comprising:
detecting if the diagnostic tool is not connected to the VCI device; and
in response to detecting the diagnostic tool not connected to the VCI device:
sending the diagnostic request to the vehicle ECU.

12. The method of any of claims 9-11, further comprising:
receiving a VCI device identification signature request from the diagnostic tool; and
signing a VCI device identification for the VCI device based on a VCI endorsement key, in response to receiving the VCI device identification signature request.

13. The method of any of claims 9-12, wherein:
receiving the security challenge comprises receiving a seed from the vehicle ECU, in response to sending the diagnostic request to the vehicle ECU; and
generating the security challenge response based on the seed, the decrypted ECU key, and the secure access protocol, in response to receiving the first security challenge response.

14. A computer program product comprising program code for performing, when executed by the processing circuitry, the method of any of claims 9-13.

15. A non-transitory computer-readable storage medium comprising instructions, which when executed by the processing circuitry, causes the processing circuitry to perform the method of any of claims 9-13.
